# EUROPEAN PATENT APPLICATION

(11) **EP 2 837 945 A1**
(43) Date of publication of application: **18.02.2015**
(21) Application number: 14180271.0
(22) Date of filing: 07.08.2014
(51) Int. Cl.: G01R 31/40

(54) **Photovoltaic power measurement system**

(30) Priority: 16.08.2013 JP 2013169150
(71) Applicant: Yokogawa Electric Corporation, Tokyo 180-8750 (JP); Hosei University, Tokyo 102-8160 (JP)
(72) Inventor: Yanagisawa, Yoshiki, Tokyo (JP); Tsubota, Takashi, Tokyo (JP); Shinagawa, Mitsuru, Tokyo (JP)
(74) Representative: Henkel, Breuer & Partner

(57) **Abstract**

A photovoltaic power measurement system (1) includes an excitation light source (11) configured to irradiate a measurement object (M) with excitation light (P), an electrical field sensor (12) configured to output a detection signal (D1) in accordance with electrical field caused by photovoltaic power generated in the measurement object, a signal generator (10) configured to output a timing signal (T1) indicating a timing of irradiating the excitation light from the excitation light source, and a signal processor (13) configured to process the detection signal output from the electrical field sensor in accordance with the timing signal, the signal processor calculating the photovoltaic power generated in the measurement object.

## Description

### BACKGROUND OF THE INVENTION

### Field of the Invention

The present invention relates to a photovoltaic power measurement system.

Priority is claimed on Japanese Patent Application No. 2013-169150, filed August 16, 2013, the content of which is incorporated herein by reference.

### Description of Related Art

In recent years, environmental consciousness is increasing, and a solar cell is paid attention to. The solar cell generates electric power with solar light which is a type of natural energy. Although the solar cell was often made of inorganic material such as silicon, compound semiconductors, and so on, in recent years, research about a dye-sensitized solar cell (organic solar cell) made of organic material has been conducted. The solar cells are often manufactured by roll-to-roll printing method to increase production efficiency.

In the roll-to-roll printing method, circuit patterns are printed by continuously applying electronic materials with pulling out a substrate rolled up, and the substrate on which the circuit patterns are printed is rolled up again. When inspecting whether the solar cells manufactured by the method generate predetermined photovoltaic power or not, in consideration of inspection efficiency, it is preferable to inspect immediately before the substrate on which the circuit patterns are printed is rolled up.

Japanese Unexamined Patent Application Publication No. H03-94175 discloses a measurement device measures surface potential of a sample. Specifically, a measurement electrode disposed near the sample is vibrated by a piezoelectric element, and the measurement device measures surface potential of the sample by detecting displacement current generated in accordance with changes of electrostatic capacity between the sample and the measurement electrode.

Japanese Unexamined Patent Application Publication No. 2000-171488 discloses an electrooptical probe for monitoring wave shapes of measured signals. Specifically, electrical field is generated by the measured signals, the electrical field and optical signals for detection enter an electrooptical element, and the electrooptical probe monitors the wave shapes of the measured signals by detecting changes of polarization state of the optical signals.

Because the measurement apparatus described in the Japanese Unexamined Patent Application Publication No. H03-94175 measures the displacement current flowing from the measurement electrode disposed near the sample to a ground electrode preliminarily set up, there is a need that electrical potential (reference potential) corresponding to ground of the sample equals to electrical potential of the ground electrode. Therefore, in a case where the reference potential of the sample is not determined (the reference potential of the sample is in a floating state), it is difficult to measure the potential of the sample. In the roll-to-roll printing method described above, because the substrate moves constantly, reference potential of the solar cells cannot be determined with ohmic contact. Therefore, it is difficult to inspect the solar cells manufactured with the technology disclosed in the Japanese Unexamined Patent Application Publication No. H03-94175.

Also, in the Japanese Unexamined Patent Application Publication No. 2000-171488, there is a need to surround around the measurement electrode with a shield case so as to suppress effects of electrical field. In a case where potentials of plural measurement points of the sample are measured with the measurement apparatus disclosed in the Japanese Unexamined Patent Application Publication No. 2000-171488, there is a problem that the measurement electrode and the shield case interfere with each other and it is difficult to measure the potentials of the plural measurement points of the sample.

### SUMMARY OF THE INVENTION

A photovoltaic power measurement system may include an excitation light source configured to irradiate a measurement object with excitation light, an electrical field sensor configured to output a detection signal in accordance with electrical field caused by photovoltaic power generated in the measurement object, a signal generator configured to output a timing signal indicating a timing of irradiating the excitation light from the excitation light source, and a signal processor configured to process the detection signal output from the electrical field sensor in accordance with the timing signal, the signal processor calculating the photovoltaic power generated in the measurement object.

### BRIEF DESCRIPTION OF THE DRAWINGS

FIG. 1 is a block diagram illustrating a configuration of a photovoltaic power measurement system in a present embodiment.
FIG. 2 is a drawing illustrating a main part configuration of the electrical field sensor in the present embodiment.
FIG. 3 is a flowchart illustrating a basic operation of the photovoltaic power measurement system.
FIG. 4A is drawing illustrating specific disposition of the electrical field sensor in the present embodiment.
FIG. 4B is drawing illustrating specific disposition of the electrical field sensor in the present embodiment.
FIG. 5 is drawing illustrating specific disposition of the electrical field sensor in the present embodiment.
FIG. 6 is a drawing illustrating a side view of a light shielding member used in the present embodiment.
FIG. 7 is a drawing illustrating a photovoltaic power measurement system in another embodiment.

### DETAILED DESCRIPTION OF THE INVENTION

Some embodiments of the present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

### (Configuration of a Photovoltaic Power Measurement System)

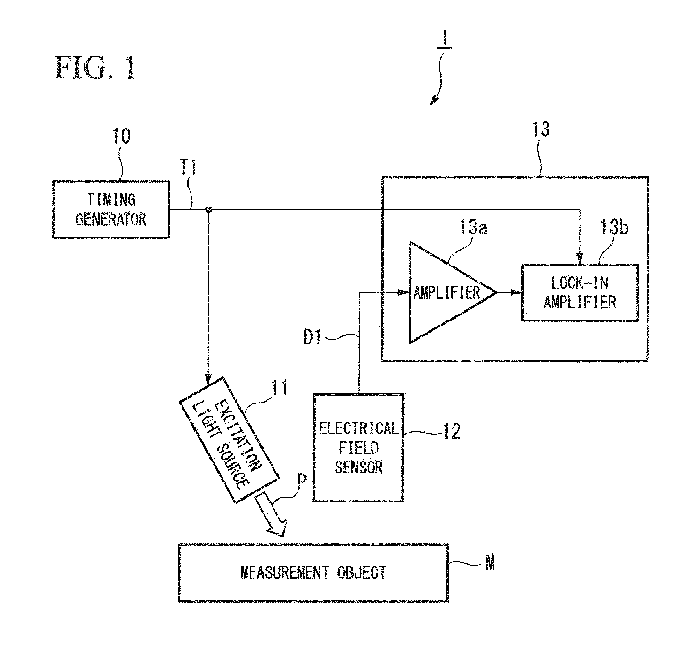

FIG. 1 is a block diagram illustrating a configuration of a photovoltaic power measurement system in the present embodiment. As shown in FIG. 1, the photovoltaic power measurement system 1 of the present embodiment includes a timing generator (signal generator) 10, an excitation light source 11, an electrical field sensor 12, and a signal processor 13. The photovoltaic power measurement system 1 irradiates a measurement object M with pulsed light P as excitation light, detects electrical field generated by photovoltaic power in the measurement object M, and measures the photovoltaic power generated in the measurement object M.

The measurement object M generates electro motive force in accordance with the irradiation of the excitation light. For example, the measurement object M is a solar cell. The solar cell is made of inorganic material such as silicon and compound semiconductors, or organic material. In the present embodiment, so as to set forth simply, a solar cell made of silicon is described below as an example. The measurement object M is a solar cell in which p-n junction is formed between p-type silicon and n-type silicon. The solar cell generates electro motive force in accordance with irradiated light by photovoltaic effect.

The timing generator 10 outputs a timing signal T1 indicating an operation timing of the photovoltaic power measurement system 1. Specifically, the timing signal T1 is input to the excitation light source 11 and the signal processor 13. The timing signal T1 indicates a timing of irradiating the pulsed light P from the excitation light source 11. Also, the timing signal T1 indicates a signal processing timing of the signal processor 13. Therefore, the timing signal T1 is used as a modulation signal of the excitation light source 11 and a signal indicating a measurement timing of the signal processor 13.

Frequency of the timing signal T1 is set in accordance with response speed of the measurement object M. The response speed is elapsed time from when pulsed light P is irradiated till when predetermined photovoltaic power is generated. For example, the frequency of the timing signal T1 is set to several tens of Hz. So as to prevent measurement accuracy from reducing by environmental noise, the frequency of the timing signal T1 is not set to a frequency easily influenced by the environmental noise. For example, the frequency of the timing signal T1 is set to a frequency other than 50Hz or 60 Hz which is a frequency of the commercial power source.

The excitation light source 11 is disposed on an upper side of the measurement object M. The upper side of the measurement object M is a side of an acceptance surface of the measurement object M. The excitation light source 11 irradiates the pulsed light P to the measurement object M. The pulsed light P is synchronized with the timing signal T1 output from the timing generator 10. As described above, because the frequency of the timing signal T1 is set to several tens of Hz, the pulsed light P of which frequency is several tens of Hz is irradiated from the excitation light source 11. The excitation light source 11 includes required number of light sources such as LED (Light Emitting Diode) to measure photovoltaic power of the measurement object M. Irradiation area of the pulsed light P is set to all area of the acceptance surface of the measurement object M. As necessary, the irradiation area of the pulsed light P may be set to a part of the acceptance surface.

The electrical field sensor 12 is disposed near the measurement object M, and detects electrical field caused by the photovoltaic power generated in the measurement object M. Also, the electrical field sensor 12 outputs a detection signal D1 indicating the detection result to the signal processor 13. As will hereinafter be described in detail, the electrical field sensor 12 has an electrooptical element (EO element). The electrical field sensor 12 detects the electrical field generated in the measurement object M through the use of phenomenon that the polarization state of the light (detection light) passing through the electrooptical element changes in accordance with the electrical field entering to the electrooptical element (the electrical field generated from the measurement object M).

The signal processor 13 processes the detection signal D1 output from the electrical field sensor 12 by using the timing signal T1 output from the timing generator 10. By the process, the signal processor 13calculates the photovoltaic power generated in the measurement object M in accordance with the irradiation of the pulsed light P. The signal processor 13 has an amplifier 13a and a lock-in amplifier 13b. The signal processor 13 performs preprocessing (amplification processing and noise removal processing) of the detection signal D1 so as to calculate the photovoltaic power.

The amplifier 13a amplifies the detection signal D1 output from the electrical field sensor 12 at a predetermined gain. The lock-in amplifier 13b detects the detection signal D1 amplified by the amplifier 13a in synchronization with the timing signal T1. When the detection is performed, noise content included in the detection signal D1 is removed. The noise content is such as capacitance coupling noise content generated from an electrical power source and noise content generated by electromagnetic induction. The noise content included in the detection signal D1 may be removed by using a bandpass filter or averaging procedure.

The signal processor 13 performs a predetermined signal process to the detection signal D1 preprocessed by the amplifier 13a and the lock-in amplifier 13b. By the process, the signal processor 13 calculates the photovoltaic power generated in the measurement object M. For example, the signal processor 13 calculates the photovoltaic power in accordance with the detection result of the electrical field sensor 12 by using a predetermined relational expression or a table. The predetermined relational expression and the table indicate a relation between the photovoltaic power generated in the measurement object M and the detection signal D1 detected by the electrical field sensor 12.

### (Main Part Configuration of the Electrical Field Sensor)

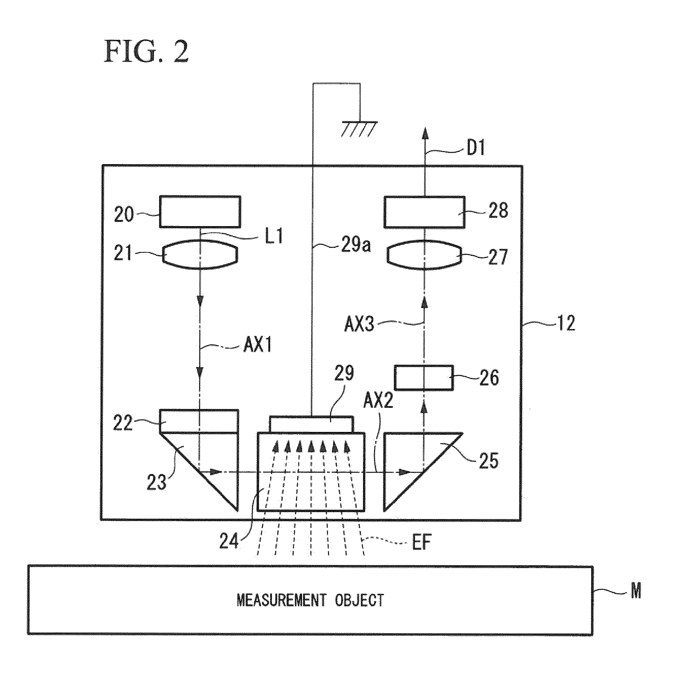

FIG. 2 is a drawing illustrating a main part configuration of the electrical field sensor in the present embodiment. As shown in FIG. 2, the electrical field sensor 12 has a laser diode 20, a collimating lens 21, a quarter wavelength plate 22, a reflection prism (reflector) 23, an electrooptical element 24, a reflection prism 25, a detection element 26, a collecting lens 27, a photodiode 28, and a ground electrode 29.

The laser diode 20, the collimating lens 21, the quarter wavelength plate 22, and the reflection prism 23 are disposed on a light axis AX1 which is perpendicular to (may be substantially perpendicular to) the surface of the measurement object M. The reflection prism 23, the electrooptical element 24, and the reflection prism 25 are disposed on a light axis AX2 which is parallel to (may be substantially parallel to) the surface of the measurement object M. The reflection prism 25, the detection element 26, the collecting lens 27, and the photodiode 28 are disposed on a light axis AX3 which is perpendicular to (may be substantially perpendicular to) the surface of the measurement object M.

A first reason of the disposition is because the sensitivity of the electrical field sensor 12 can be improved by disposing the electrooptical element 24 near the measurement object M. In other words, because strength of the electrical field generated in the measurement object M is decreased with distance from the measurement object M, there is a need to improve the sensitivity of the electrical field sensor 12 by detecting the electrical field at a position where the electrical field is strong. Also, a second reason of the disposition is because negative effect of parts other than the electrooptical element 24 should be removed as much as possible. In other words, because the negative effect of the parts unrelated directly to the measurement of the electrical field should be removed as much as possible by disposing the parts apart from the measurement object M.

The laser diode 20 irradiates laser beam L1 to the electrooptical element 24. For example, the laser beam L1 irradiated from the laser diode 20 is CW light (Continuous Wave light) of linear polarization state. The collimating lens 21 transforms the laser beam L1 irradiated from the laser diode 20 into parallel light. The quarter wavelength plate 22 transforms the polarization state of the laser beam passed through the collimating lens 21 from linear polarization state into circular polarization state. The reflection prism 23 reflects the laser beam passed through the quarter wavelength plate 22. The reflected laser beam enters the electrooptical element 24. The reflection prism 23 reflects the laser beam from the light axis AX1 to the light axis AX2. The electrooptical element 24 allows propagation, in the electrooptical element 24, of the electrical field caused by the photovoltaic power generated in the measurement object M.

The electrooptical element 24 has characteristics that birefringence rate is changeable in accordance with the strength of the electrical field. Also, the electrooptical element 24 is disposed at a bottom of the electrical field sensor 12 so as to dispose the electrooptical element 24 near the measurement object M. Specifically, in a case where electrical field EF caused by the photovoltaic power generated in the measurement object M enters the electrooptical element 24, the birefringence rate is changed greatly. The electrical field EF includes electrical field perpendicular to the light axis AX2 and electrical field substantially perpendicular to the light axis AX2. So as to improve the sensitivity of the electrical field sensor 12, a length of the electrooptical element 24 in a direction along the light axis AX2 is long as much as possible.

The reflection prism 25 reflects the laser beam passed through the electrooptical element 24. The reflected laser beam enters the detection element 26. The reflection prism 25 reflects the laser beam from the light axis AX2 to the light axis AX3. The detection element 26 detects the polarization state of the laser beam passed through the electrooptical element 24. Also, the detection element 26 converts the change of the polarization state of the laser beam into a change of laser beam strength. PBS (Polarization Beam Splitter) may be used instead of the detection element 26, and the laser beam from the reflection prism 25 may be split into P wave and S wave. The collecting lens 27 collect the laser beam from the detection element 26 on the acceptance surface of the photodiode 28. The photodiode 28 accepts the laser beam collected by the collecting lens 27, and outputs the detection signal D1.

The ground electrode 29 is disposed on a surface opposite to an entrance surface where the electrical field EF enters. In other words, the ground electrode 29 is disposed on an upper surface of the electrooptical element 24. The ground electrode 29 is electrically connected to ground with a wiring 29a. The ground electrode 29 is disposed so as to concentrate the electrical field EF on the electrooptical element 24 and increase the strength of the electrical field EF. If the strength of the electrical field EF is increased, the sensitivity of the electrical field sensor 12 can be improved. However, if the electrical field sensor 12 is made of metal, the electrical field EF becomes non-uniform and interference is generated. Therefore, in the electrical field sensor 12, parts other than the laser diode 20, the photodiode 28, the ground electrode 29, and the wiring 29a are made of materials other than metal.

### (Basic Operation of the Photovoltaic Power Measurement System)

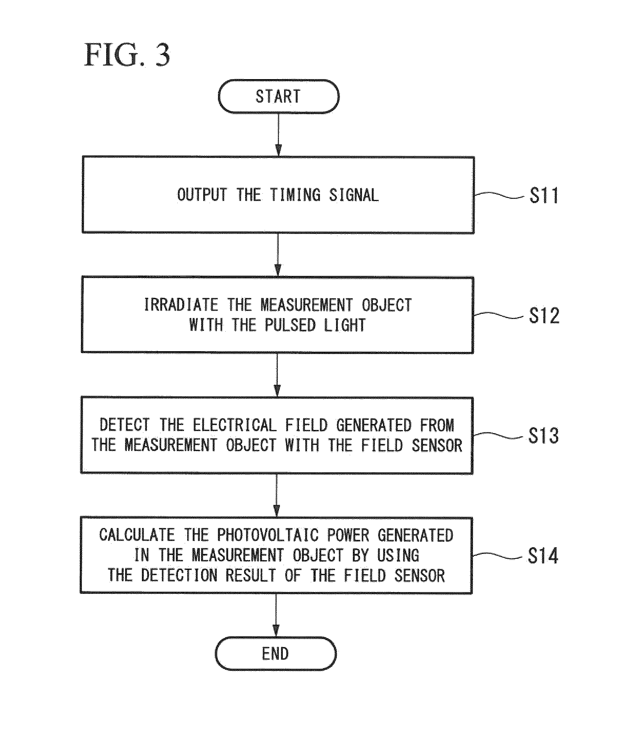

FIG. 3 is a flowchart illustrating a basic operation of the photovoltaic power measurement system. In accordance with starting the operation of the photovoltaic power measurement system 1, the timing signal T1 is output from the timing generator 10 (Step S11). The timing signal T1 is input to the excitation light source 11 and the signal processor 13 respectively.

After the timing signal T1 output from the timing generator 10 is input to the excitation light source 11, the excitation light source 11 irradiates the measurement object M with the pulsed light P synchronized with the timing signal T1 (Step S12). By the irradiation, electro motive force (photovoltaic power) is generated according to the pulsed light P in the measurement object M. Also, the electrical field EF is generated in accordance with the photovoltaic power generated from the measurement object M.

After the photovoltaic power is generated from the measurement object M, the electrical field sensor 12 detects the electrical field EF (Step S13). As shown in FIG 2, the electrical field EF generated from the measurement object M enters the electrooptical element 24 disposed in the electrical field sensor 12. After that, the birefringence rate of the electrooptical element 24 is changed in accordance with the electrical field EF. The laser beam irradiated from the laser diode 20 is transformed from linear polarization state into circular polarization state. The polarization state of the laser beam passed through the electrooptical element 24 is changed in accordance with the change of the birefringence rate of the electrooptical element 24.

The laser beam passed through the electrooptical element 24 is reflected by the reflection prism 25. The reflected laser beam enters the detection element 26. The detection element 26 detects the change of the polarization state of the laser beam. In other words, the detection element 26 converts the change of the polarization state of the laser beam into a change of laser beam strength. After that, the collecting lens 27 collect the laser beam from the detection element 26 on the acceptance surface of the photodiode 28. By these steps, the detection signal D1 according to the electrical field EF generated from the measurement object M is output from the electrical field sensor 12.

After the completion of the measurement of the electrical field EF generated from the measurement object M, the signal processor 13 calculates the photovoltaic power generated in the measurement object M by using the detection result of the field sensor 12 (Step S14). Specifically, the amplifier 13a amplifies the detection signal D1 output from the electrical field sensor 12. Also, the preprocessing for removing noise contents is performed by using the timing signal T1 output from the timing generator 10.

Next, the signal processor 13 calculates the photovoltaic power in accordance with the detection signal D1 output from the electrical field sensor 12 by using the predetermined relational expression or the table described above. The predetermined relational expression and the table indicate a relation between the photovoltaic power generated in the measurement object M and the detection signal D1 detected by the electrical field sensor 12. As described above, the photovoltaic power generated in the measurement object M is measured by irradiating the pulsed light P to the measurement object M.

### (Specific Configuration of the Photovoltaic Power Measurement System)

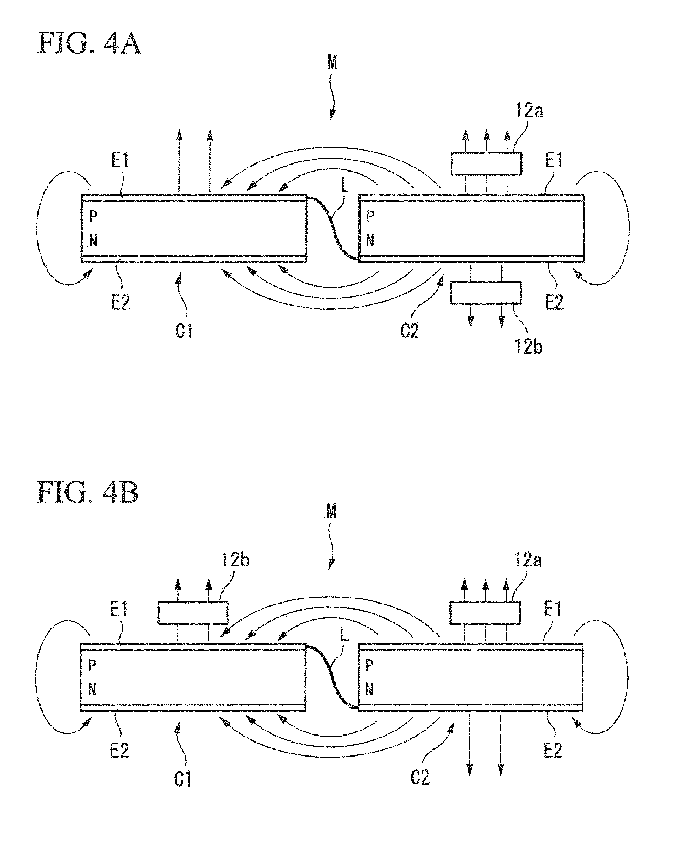

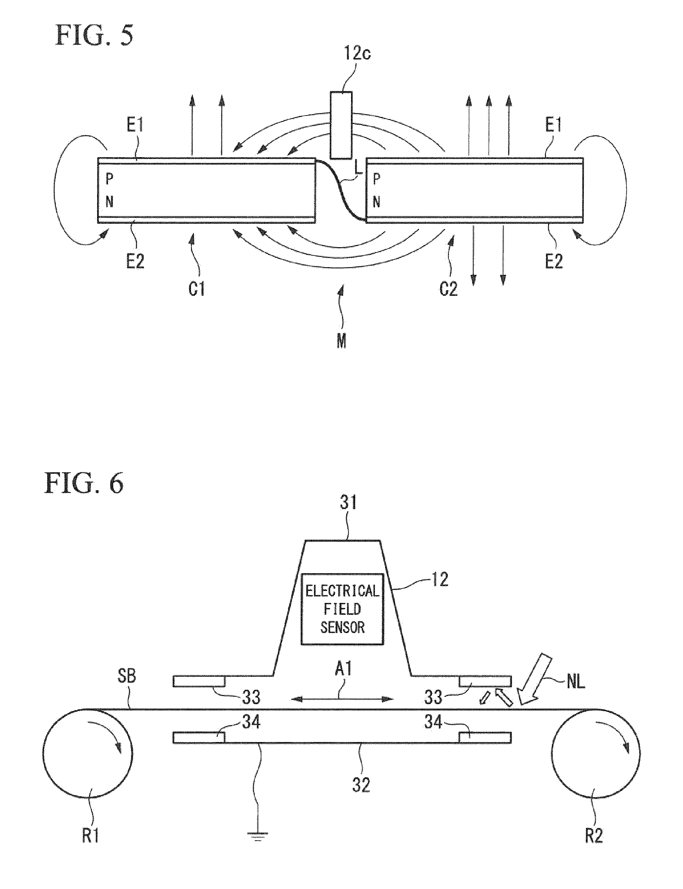

Specific configurations for inspecting the solar cells manufactured by the toll-to-roll printing method are described below. FIG. 4A, FIG. 4B and FIG. 5 are drawings illustrating specific dispositions of the electrical field sensor in the present embodiment. First, specific configuration of the measurement object M, as a solar cell manufactured by the roll-to-roll printing method, is described with reference to FIG. 4A, FIG. 4B and FIG 5.

As shown in FIG 4A, FIG 4B and FIG. 5, the measurement object M has plural electrical battery cells (electrical battery elements) C1 and C2 which are electrically connected with each other with a serial connection. So as to set forth simply, only two electrical battery cells C1 and C2 are illustrated in FIG. 4A, FIG. 4B and FIG. 5. However, the number of the electrical battery cells may be equal to or more than three. In the electrical battery cell C1, a positive electrode (first electrode) E1 is disposed on an upper surface of the substrate where p-n junction is formed. In the electrical battery cell C2, a negative electrode (second electrode) E2 is disposed on a lower surface of the substrate where p-n junction is formed. When the excitation light source 11 irradiates the pulsed light P, the photovoltaic power is generated in accordance with the pulsed light P between the positive electrode E1 and the negative electrode E2. The configuration of the electrical battery cell C2 is same with the configuration of the electrical battery cell C1.

In the examples shown in FIG 4A, FIG 4B and FIG 5, the positive electrode E I of the electrical battery cell C1 is connected to the negative electrode E2 of the electrical battery cell C2 with a line L so that the electrical battery cells C1 and C2 are connected with each other with a serial connection. To the contrary, the negative electrode E2 of the electrical battery cell C1 may be connected to the positive electrode E1 of the electrical battery cell C2 with the line L so that the electrical battery cells C1 and C2 are connected with each other with a serial connection.

Next, specific configuration of the electrical field sensor is described below with reference to FIG. 4A, FIG. 4B and FIG. 5. In the FIG. 4A, FIG. 4B and FIG. 5, the electrical field sensor 12 is illustrated with simplified manner. In the examples shown in FIG. 4A and FIG. 4B, the photovoltaic power generated in the measurement object M is calculated based on a difference between detection results of two electrical field sensors. In the example of FIG. 4A, a first electrical field sensor 12a is disposed above the upper surface of the measurement object M, and a second electrical field sensor 12b is disposed below the lower surface of the measurement object M.

Specifically, the first and second electrical field sensors 12a and 12b are disposed above the upper surface and below the lower surface of the measurement object M respectively so that the electrical battery cell C2 can be detected simultaneously. In other words, as shown in FIG. 4A, the first and second electrical field sensors 12a and 12b are disposed so that the first electrical field sensor 12a can detect the electrical field generated from the upper surface of the electrical battery cell C2 and the second electrical field sensor 12b can detect the electrical field generated from the lower surface of the electrical battery cell C2 simultaneously. The electrical field generated from the upper surface of the electrical battery cell C2 is vertical electrical field substantially perpendicular to the upper surface of the electrical battery cell C2. Also, the electrical field generated from the lower surface of the electrical battery cell C2 is vertical electrical field substantially perpendicular to the lower surface of the electrical battery cell C2.

In the example of FIG. 4B, the first and second electrical field sensors 12a and 12b are disposed above the upper surface of the measurement object M. Specifically, the first and second electrical field sensors 12a and 12b are disposed above the upper surface of the measurement object M so that the electrical battery cells C1 and C2 can be detected simultaneously. In other words, as shown in FIG. 4B, the first and second electrical field sensors 12a and 12b are disposed above the upper surface of the measurement object M so that the first electrical field sensor 12a can detect the vertical electrical field generated from the upper surface of the electrical battery cell C2 and the second electrical field sensor 12b can detect the vertical electrical field generated from the upper surface of the electrical battery cell C1 simultaneously.

In the examples of FIG. 4A and FIG 4B, because the positive electrode E1 of the electrical battery cell C1 is connected to the negative electrode E2 of the electrical battery cell C2 with the line L, the positive electrode E1 of the electrical battery cell C1 and the negative electrode E2 of the electrical battery cell C2 have same electrical potential. Therefore, if the irradiated pulsed light P is same in any cases of FIG. 4A and FIG. 4B, the photovoltaic power calculated with the first and second electrical field sensors 12a and 12b in FIG 4A equals to the photovoltaic power calculated with the first and second electrical field sensors 12a and 12b in FIG. 4B.

As shown in FIG. 4A and 4B, in a case where the first and second electrical field sensors 12a and 12b are used, detection signals output from the first and second electrical field sensors 12a and 12b are input to the signal processor 13. Also, the signal processor 13 performs the preprocessing (amplification processing and noise removal processing) for the detection signals respectively. The signal processor 13 calculates difference between the preprocessed detection signals, and calculates the photovoltaic power in accordance with the difference. In the examples of FIG. 4A and FIG. 4B, the photovoltaic power of the electrical battery cell C2 is calculated.

To the contrary, in the example of FIG. 5, the photovoltaic power generated in the measurement object M is calculated by using only one electrical field sensor. In the FIG. 5, a third electrical field sensor 12c is disposed above the upper surface of the measurement object M. Although the first and second electrical field sensors 12a and 12b detect the vertical electrical field generated in the electrical battery cells C1 and C2 in the FIG. 4A and FIG. 4B, the third electrical field sensor 12c detects horizontal electrical field generated between the electrical battery cells C1 and C2. The third electrical field sensor 12c is implemented by rotating crystal direction of the electrooptical element 24 (shown in FIG. 2) 90 degrees.

In the example of FIG. 5, the third electrical field sensor 12c detects horizontal electrical field generated between the positive electrode E1 of the electrical battery cell C2 and the positive electrode E1 of the electrical battery cell C 1. As described above, the positive electrode E1 of the electrical battery cell C1 and the negative electrode E2 of the electrical battery cell C2 have same electrical potential. Therefore, if the irradiated pulsed light P is same in any cases of FIG. 4A, FIG. 4B, and FIG. 5, the photovoltaic power calculated with the third electrical field sensor 12c equals to the photovoltaic power calculated with the first and second electrical field sensors 12a and 12b in FIG 4A or FIG. 4B.

As shown in FIG. 5, in a case where the only one electrical field sensor 12c is used, detection signal output from the third electrical field sensor 12c is input to the signal processor 13. Also, the signal processor 13 performs the preprocessing (amplification processing and noise removal processing) for the detection signal. The signal processor 13 calculates the photovoltaic power directly in accordance with the preprocessed signal. In the examples of FIG. 5, the photovoltaic power of the electrical battery cell C2 is calculated.

FIG. 6 is a drawing illustrating a side view of a light shielding member used in the present embodiment. As shown in FIG. 6, because the measurement object M such as a solar cell is manufactured by roll-to-roll printing method, at least two rollers R1 and R2 are installed. The roller R1 is a feeding roller on which the substrate SB rolled up. The measurement object M such as a solar cell is manufactured in the substrate SB. The roller R2 is a rolling-up roller rolling up the substrate SB in which the measurement object M is manufactured.

The photovoltaic power measurement system 1 is disposed between the roller R1 and the roller R2. In the example of FIG. 6, so as to set forth simply, only one electrical field sensor 12 installed in the photovoltaic power measurement system 1 is illustrated. In the FIG. 6, an area A1 indicates measurement area of the electrical field sensor 12. Although the illustration of the FIG. 6 is simplified, the photovoltaic power measurement system 1 is disposed closer to the roller R2 than the roller R1 because the photovoltaic power measurement system 1 measures the measurement object M as a manufactured solar cell.

As shown in FIG. 6, a light shielding cover (first shielding member) 31 is disposed above the substrate SB. The light shielding cover 31 covers the upper surface of the measurement object M (not shown in FIG. 6) on the substrate SB and the electrical field sensor 12. Also, a light shielding cover (second shielding member) 32 is disposed below the substrate SB. The light shielding cover 32 covers the lower surface of the measurement object M on the substrate SB. The light shielding covers 31 and 32 may be integral with each other. However, in the present embodiment, the light shielding covers 31 and 32 are separated from each other so as to maintain easily.

The light shielding covers 31 and 32 shields noise light NL so as to improve measurement accuracy of the photovoltaic power measured by the photovoltaic power measurement system 1. The light shielding covers 31 and 32 cover at least the entire upper surfaces and the entire lower surfaces of the electrical battery cells C1 and C2 serial-connected with each other shown in FIG. 4A, FIG. 4B, and FIG 5.

A first light absorption sheet 33 is disposed on the lower surface of the light shielding cover 31 near the edge of the light shielding cover 31. Also, a second light absorption sheet 34 is disposed on the upper surface of the light shielding cover 32 near the edge of the light shielding cover 32. The first and second light absorption sheets 33 and 34 are installed so as to prevent the noise light NL from entering the measurement area A1. So as to prevent the noise light NL from multiply-reflecting, the first light absorption sheet 33 may be disposed on the entire lower surface of the light shielding cover 31 and the second light absorption sheet 34 may be disposed on the entire upper surface of the light shielding cover 32.

For example, the light shielding covers 31 and 32 are made of non-metallic materials such as resin and so on. In a case where there is a need for electromagnetic shield (for example, in a case where there is a need to suppress effects of environmental noise), light shielding covers made of metallic materials or magnetic materials may be used. However, if the light shielding covers made of metallic materials are used, there is a need to ground the light shielding covers so as not to be charged. This is because there is a need to suppress effects of electrical field generated from the light shielding covers being charged.

As shown in FIG. 4A, in a case where the first electrical field sensor 12a is disposed above the upper surface of the substrate SB and the second electrical field sensor 12b is disposed below the lower surface of the substrate SB, a light shielding cover same with the light shielding cover 31 is disposed below the lower surface of the substrate SB. Also, as shown in FIG. 4B, the first and second electrical field sensors 12a and 12b are disposed above the upper surface of the substrate SB, the light shielding cover 31 covers both of the first and second electrical field sensors 12a and 12b.

In the specific configuration of the photovoltaic power measurement system described with FIG. 4A, FIG. 4B, FIG. 5, and FIG. 6, the operation of the flowchart shown in FIG. 3 is performed basically, the photovoltaic power generated in the measurement object M is measured. Therefore, detail explanation of operation of the specific configuration of the photovoltaic power measurement system 1 is left out.

As described above, in the present embodiment, excitation light source 11 irradiates the measurement object M with the pulsed light P which is an excitation light, the electrical field sensor 12 (the electrical field sensors 12a, 12b, and 12c) detects the electrical field caused by the photovoltaic power generated in the measurement object M by the irradiated pulsed light P, the signal processor 13 processes the detection signal D1 output from the electrical field sensor 12 by using the timing signal T1 so that the photovoltaic power generated in the measurement object M can be calculated. Therefore, even if reference potential is not determined, the photovoltaic power generated in the measurement object M can be calculated accurately.

Also, because the electrical field sensor 12 detects the electrical field in accordance with the change of the polarization state of the laser beam caused by the electrical field entering the electrooptical element 24, the electrical field sensor 12 is hardly affected by outside electrical noise. By reducing a number of metallic parts installed in the electrical field sensor 12, the measurement can be performed without making the electrical field generated from the measurement object M non-uniform as much as possible. Therefore, the photovoltaic power measurement system 1 can measure at plural measurement points. For example, the photovoltaic power measurement system 1 can measure planar distribution.

### (Another Embodiment)

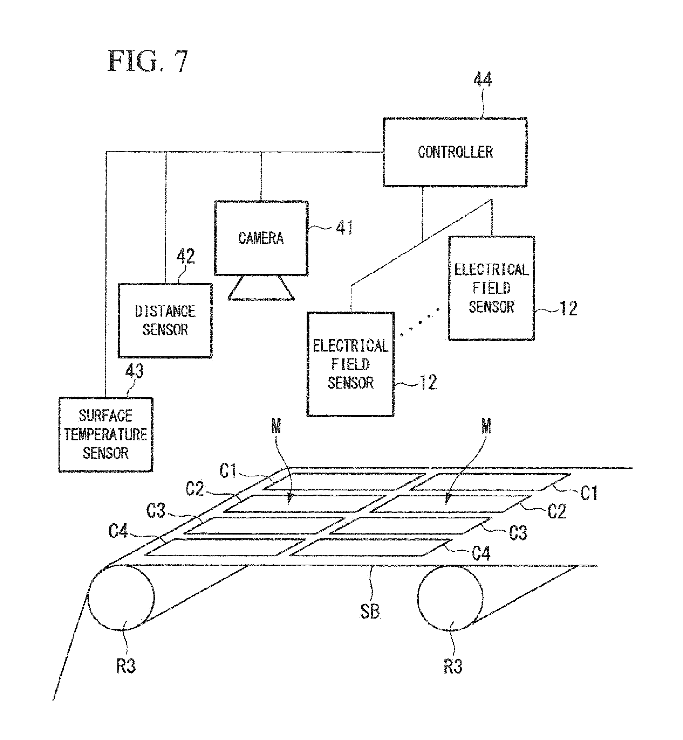

FIG. 7 is a drawing illustrating a photovoltaic power measurement system in another embodiment. As shown in FIG. 7, the photovoltaic power measurement system of another embodiment includes plural electrical field sensors 12, a camera (position detection sensor) 41, a distance sensor (first sensor) 42, a surface temperature sensor (second sensor) 43, and controller 44. The photovoltaic power measurement system inspects a measurement object M manufactured on a substrate SB conveyed by rollers R3. In FIG. 7, the measurement object M has four electrical battery cells C1 to C4 which are serial-connected with each other. Although excitation light sources 11 are installed in the photovoltaic power measurement system, the excitation light sources 11 are not shown in FIG. 7.

The plural electrical field sensors 12 are same with the electrical field sensors 12 shown in FIG. 1. In the example of FIG. 7, four electrical field sensors 12 relating to the four electrical battery cells C1 to C4 are disposed along a direction perpendicular to conveyance direction of the substrate SB with a predetermined gap. The electrical field sensors 12 detect electrical field generated from surfaces of the electrical battery cells C1 to C4. Also, the electrical field sensors 12 output detection signals indicating detection results to the controller 44.

The camera 41 has an imaging element such as CCD (Charge Coupled Device). The camera 41 is disposed upstream of the electrical field sensors 12 in the conveyance direction of the substrate SB. Also, the camera 41 photographs the substrate SB on which the measurement object M is manufactured. Image signals of images taken by the camera 41 are output to the controller 44. The controller 44 detects an edge position of the measurement object M manufactured on the substrate SB with reference to the images taken by the camera 41, and controls measurement start timing of the measurement object M.

The distance sensor 42 measures surface position of the substrate SB on which the measurement object M is manufactured. Also, the distance sensor 42 outputs a signal indicating the measurement result to the controller 44. The surface temperature sensor 43 detects surface temperature of the substrate SB on which the measurement object M is manufactured. Also, the surface temperature sensor 43 outputs a signal indicating the detection result to the controller 44. The measurement result of the electrical field sensors 12 is changed in accordance with the surface position of the substrate SB and the surface temperature of the substrate SB. Therefore, the distance sensor 42 and the surface temperature sensor 43 are installed in the photovoltaic power measurement system so as to correct the measurement result of the electrical field sensors 12.

The controller 44 has the timing generator 10 and the signal processor 13 shown in FIG. 1. The controller 44 controls operations of the photovoltaic power measurement system in the present embodiment. Specifically, the controller 44 detects the edge position of the measurement object M manufactured on the substrate SB with reference to the images taken by the camera 41, and controls measurement start timing of the measurement object M. In other words, the controller 44 controls a timing of outputting the timing signal T1 from the timing generator 10.

The controller 44 corrects the photovoltaic power measured by the signal processor 13 in accordance with the measurement result of the distance sensor 42. Also, the controller 44 corrects the photovoltaic power measured by the signal processor 13 in accordance with the detection result of the surface temperature sensor 43. In other words, the controller 44 corrects temperature dependence property of the electrical battery cells C1 to C4 of the measurement object M. By the correction, the photovoltaic power generated from the measurement object M can be measured accurately.

The controller 44 may detect a size of the electrical battery cells based on the images taken by the camera 41 and control the excitation light sources 11 and the electrical field sensors 12 in accordance with the detected size. For example, the controller 44 may control the excitation light sources 11 to change a spot size of the pulsed light P and an irradiating position of the pulsed light P. Also, the controller 44 may control the electrical field sensors 12 to change a detection position of the electrical field.

Although a photovoltaic power measurement system according to embodiments of the present invention has been described above, the present invention is not restricted to the above-described embodiments, and can be freely modified within the scope thereof. For example, although the foregoing descriptions of the embodiments have been examples in which the measurement object M is a solar cell made of silicon, the measurement object M may be an organic solar cell.

Also, although the foregoing descriptions of the embodiments have been examples in which the ground electrode 29 is disposed on the electrooptical element 24 of the electrical field sensor 12, the ground electrode 29 may be omitted if required sensitivity can be achieved. Also, the foregoing descriptions of another embodiment have been examples in which the controller 44 detects the edge position of the measurement object M with reference to the images taken by the camera 41, the controller 44 may detect the edge position of the measurement object M by using a sensor such as a photosensor instead of the camera 41.

Also, in the example of FIG. 4B, although the first and second electrical field sensors 12a and 12b detect the vertical electrical field generated from the upper surface of the electrical battery cells C1 and C2 simultaneously, the vertical electrical field may be detected by only one electrical field sensor (for example, the first electrical field sensor 12a). For example, the first electrical field sensor 12a may detect the vertical electrical field generated from the upper surface of the electrical battery cell C2, move to the position of the second electrical field sensor 12b shown in FIG 4B, and detect the vertical electrical field generated from the upper surface of the electrical battery cell C1.

As used herein, the following directional terms "above, vertical, horizontal, and below" as well as any other similar directional terms refer to those directions of an apparatus equipped with the present invention. Accordingly, these terms, as utilized to describe the present invention should be interpreted relative to an apparatus equipped with the present invention.

The term of degree such as "substantially" as used herein mean a reasonable amount of deviation of the modified term such that the end result is not significantly changed. For example, these terms can be construed as including a deviation of at least ± 5 percents of the modified term if this deviation would not negate the meaning of the word it modifies.

The term "configured" is used to describe a component, unit or part of a device includes hardware and/or software that is constructed and/or programmed to carry out the desired function.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. A photovoltaic power measurement system comprising:
an excitation light source configured to irradiate a measurement object with excitation light;
an electrical field sensor configured to output a detection signal in accordance with electrical field caused by photovoltaic power generated in the measurement object;
a signal generator configured to output a timing signal indicating a timing of irradiating the excitation light from the excitation light source; and
a signal processor configured to process the detection signal output from the electrical field sensor in accordance with the timing signal, the signal processor calculating the photovoltaic power generated in the measurement object.

2. The photovoltaic power measurement system according to claim 1, wherein the electrical field sensor comprises:
an electrooptical element configured to allow propagation, in the electrooptical element, of the electrical field caused by the photovoltaic power generated in the measurement object;
a light source configured to irradiate the electrooptical element with detection light;
a detection element configured to detect polarization state of the detection light passed through the electrooptical element; and
a reflector configured to reflect the detection light irradiated from the light source to a direction crossing a direction of the electrical field, the electrooptical element being irradiated with the reflected detection light.

3. The photovoltaic power measurement system according to claim 2, wherein the electrical field sensor further comprises a ground electrode disposed on a surface of the electrooptical element opposite to an entrance surface where the electrical field enters.

4. The photovoltaic power measurement system according to claim 1, wherein the measurement object comprises:
first electrodes disposed on an upper surface of the measurement object;
second electrodes disposed on a lower surface of the measurement object; and
first and second electrical battery elements configured to generate photovoltaic power between the first electrodes and the second electrodes,
wherein the first electrode of the first electrical battery element is electrically connected to the second electrode of the second electrical battery element.

5. The photovoltaic power measurement system according to claim 4, wherein the electrical field sensor comprises:
a first electrical field sensor disposed above the upper surface of the measurement object, the first electrical field sensor detecting the electrical field of the second electrical battery element; and
a second electrical field sensor disposed below the lower surface of the measurement object, the second electrical field sensor detecting the electrical field of the second electrical battery element simultaneously with the first electrical field sensor.

6. The photovoltaic power measurement system according to claim 4, wherein the electrical field sensor comprises:
a first electrical field sensor disposed above the upper surface of the measurement object, the first electrical field sensor detecting the electrical field of the second electrical battery element; and
a second electrical field sensor disposed above the upper surface of the measurement object, the second electrical field sensor detecting the electrical field of the first electrical battery element.

7. The photovoltaic power measurement system according to claim 4, wherein
the electrical field sensor configured to detect electrical field generated between the first electrical battery element and the second electrical battery element.

8. The photovoltaic power measurement system according to claim 1, further comprising:
a light shielding member configured to cover measurement object M and the electrical field sensor, the light shielding member shielding noise light.

9. The photovoltaic power measurement system according to claim 1, further comprising:
a position detection sensor configured to detect a position of the measurement object in a predetermined conveyance direction of the measurement object; and
a controller configured to control measurement start timing of the photovoltaic power in accordance with a detection result of the position detection sensor.

10. The photovoltaic power measurement system according to claim 1, further comprising:
at least one of a first sensor configured to detect a surface position of the measurement object and a second sensor detecting temperature of the measurement object; and
a controller configured to correct the photovoltaic power calculated by the signal processor in accordance with a detection result of at least one of the first sensor and the second sensor.

11. The photovoltaic power measurement system according to claim 8, wherein the light shielding member comprises:
a first shielding member disposed above the measurement object, the first shielding member covering the upper surface of the measurement object and the electrical field sensor; and
a second shielding member disposed below the measurement object, the second shielding member covering the lower surface of the measurement object.

12. The photovoltaic power measurement system according to claim 11, further comprising:
a first light absorption sheet disposed on a lower surface of the first shielding member; and
a second light absorption sheet disposed on a upper surface of the second shielding member.

13. The photovoltaic power measurement system according to claim 9, wherein
the position detection sensor is a camera taking an image of the measurement object,
the measurement object comprises an electrical battery element, and
the controller is configured to detect a size of the electrical battery element based on the image taken by the camera.

14. The photovoltaic power measurement system according to claim 13 wherein
the controller is configured to control the excitation light source to change a spot size of the excitation light and an irradiating position of excitation light in accordance with the size detected by the controller.

15. The photovoltaic power measurement system according to claim 13 wherein
the controller is configured to control the electrical field sensor to change a detection position of the electrical field in accordance with the size detected by the controller.
